# EUROPÄISCHE PATENTSCHRIFT

(11) **EP 2 339 681 B1**
(45) Veröffentlichungstag und Bekanntmachung des Hinweises auf die Patenterteilung: **18.09.2013**
(21) Anmeldenummer: 10195401.4
(22) Anmeldetag: 16.12.2010
(51) Int. Cl.: F01L 9/04, F25D 29/00, F16K 31/08, H01F 7/16, H01M 8/04

(54) **Elektromagnetischer Aktuator**
Electromagnetic actuator
Actionneur électromagnétique

(30) Priorität: 18.12.2009 DE 102009059031
(43) Veröffentlichungstag der Anmeldung: 29.06.2011
(73) Patentinhaber: Bayerische Motoren Werke Aktiengesellschaft, 80809 München (DE); LUXEMBOURG PATENT COMPANY S.A., 7440 Lintgen (LU)
(72) Erfinder: Werner, Claus, 82008 Unterhaching (DE); Becker, Daniel, 54332 Wasserliesch (DE)
(74) Vertreter: Schmidt, Günter H. H.

(56) Entgegenhaltungen:
- EP-A1- 0 867 898
- EP-A1- 1 167 702
- DE-A1- 10 207 828
- DE-A1- 19 821 806
- DE-A1-102008 000 534
- DE-U1- 20 203 718
- FR-A1- 2 271 475
- FR-A1- 2 393 214
- FR-A1- 2 891 340
- GB-A- 2 175 452
- US-A- 4 220 312
- US-A- 5 988 124

## Beschreibung

Die Erfindung betrifft einen elektromagnetischen Aktuator nach dem Oberbegriff des ersten Anspruchs.

Solche elektromagnetischen Aktuatoren sind für ganz verschiedene Anwendungen einsetzbar, unter anderem auch als Linearantrieb zum Öffnen und Schließen von Ventilen.

Es ist zusätzlich bereits bekannt, Kraftfahrzeuge zum Beispiel mit Wasserstoff oder Erdgas anzutreiben und diesen Treibstoff als kondensiertes Gas in einem Behälter im Kraftfahrzeug zu speichern. Zu dieser verflüssigten Speicherung sind spezielle druckfeste Behälter notwendig, die aufgrund der tiefen Speichertemperaturen eine sehr gute Isolation besitzen sollten. Dabei ist bekannt, zur Vermeidung von Wärmeeintrag.aus der Umgebung, doppelwandige, vakuumisolierte Behälter zu verwenden. In einer Ausführungsform als Hochdruckbehälter liegt deren Betriebstemperaturbereich zwischen 30K und 358 K, bei regulärem Betriebsdruck zwischen 0 bar und 350 bar. Solche mobilen kryogenen Hochdruckspeicher besitzen nach derzeitigem Stand mindestens eine Entnahmeeinrichtung für den kryogen gespeicherten Kraftstoff, die mindestens aus einer Entnahmeleitung mit einem tanknah untergebrachten Absperrventil besteht.

Die EP 0 535 394 B1 beschreibt ein Magnetventil für tiefkalte verflüssigte Gase als Absperrventil für ein Entnahmesystem für Flüssigwasserstoff aus einem Speichertank. Eine Druckfeder übernimmt dort die Schließfunktion, während das Öffnen des Kryovehtils durch Bestromung eines Spulenkörpers erfolgt, was bewirkt, dass zuerst ein Oberanker und dann ein Unteranker mit einem Verschlussorgan entgegen der Kraft der Druckfeder vom Ventilsitz weg bewegt werden. Sollte diese Druckfeder im Betrieb versagen, ist das Ventil nicht mehr geschlossen und der Tankinhalt mit der Entnahmeleitung verbunden.

Die DE 198 32 198 A1 beschreibt einen Ventiltrieb für einen Verbrennungsmotor mittels elektromagnetischen Aktuatoren. Jeder Aktuator besitzt eine Öffner- und eine Schließer-Spule, bei deren abwechselnder Erregung eine Stößelstange mit daran befestigtem, zwischen den Spulen bewegbarem Anker das Ladungswechsel-Ventil gegen die Kraft je einer Rückstellfeder jeweils in die eine oder entgegengesetzte Richtung bis auf Anschlag zieht.

Des Weiteren beschreiben die GB 2 175 452 A ein Flüssigkeit-durchströmtes elektromagnetisch betätigtes Einspritzventil ohne Ankerspindel, die DE 102 07 828 A1 einen elektromagnetischen Hubmagneten mit Permanentmagnet, der zum Schalten Stromimpulse umgekehrter Polarität in den Spulen benötigt und die DE 10 2008 000 534 A1, dass bei einer elektromagnetischen Stellvorrichtung mit drei Elektromagneten drei mögliche Stellungen anfahrbar sind, ebenfalls durch Umpolen der Magnetfelder.

Der nächstliegende Stand der Technik, die EP 0 867 898 A1, beschreibt eine elektromagnetisch arbeitende Stelleinrichtung mit zwei zueinander beabstandeten und jeweils eine Erregerspule aufweisenden Magnetsystemen, zwischen welchen ein mit einem Stellschaft feststehend verbundener, zwischen zwei entgegengesetzt wirkenden Federn eingespannter und durch die Magnetsysteme in zwei Schaltpositionen bewegbarer Anker angeordnet ist, wobei einem einzigen der beiden Magnetsysteme ein Dauermagnet zugeordnet ist, und wobei die beiden Erregerspulen entweder in Reihe oder parallel zueinander geschaltet sowie mit Ausgangsklemmen einer Steuerschaltung verbindbar sind. Die elektromagnetisch arbeitende Stelleinrichtung ist dadurch gekennzeichnet, dass den beiden unverändert in Reihe oder parallel zueinander geschalteten Erregerspulen von der Steuerschaltung zum wechselseitigen Bewegen des Ankers in die erste und die zweite Schaltposition Ein-/Aus-Steuersignale bereitgestellt werden, wobei das Ein-Steuersignal nach einem vorgegebenen ersten Wert (Übererregung) auf einen niedrigeren zweiten Wert (Halteerregung) absenkbar ist. Bei einer bevorzugten Ausführung sind die Federn und der Dauermagnet so dimensioniert, dass der Anker im unbestromten Zustand der beiden Erregerspulen aus der allein durch die Federn vorgegebenen stabilen Federlage in Richtung desjenigen Magnetsystems, dem der Dauermagnet zugeordnet ist, versetzt ist.

Im Allgemeinen können mit Konzepten mit elektromagnetischem Ventilantrieb für die Verwendung im Zusammenhang mit tiefkalten Gasen im Kraftfahrzeug bei akzeptabler Anzugs- und Halteleistung nur vergleichsweise geringe Kräfte eines Schließelements, zum Beispiel einer Feder, überwunden werden. Durch die niedrigen zur Verfügung stehenden Dichtkräfte am Ventilsitz und den massiven Elastizitätsverlust aller bekannten Dichtungsmaterialien im kryogenen Bereich, weisen diese Ventile bei tiefkaltem Betrieb sehr schlechte interne Dichtheiten auf. Zudem steigt die Partikelempfindlichkeit aufgrund der Relevanz der sehr genauen Dichtungsoberflächen stark an und ein Einsatz von Filterelementen ist erforderlich, welche aber wiederum den Druckverlust im Entnahme- und Betankungsstrom deutlich erhöhen.

Aufgabe der vorliegenden Erfindung ist es, einen elektromagnetischen Aktuator bereitzustellen, der ohne Druckfeder als Rückstellelement auskommt, um den Anzugsstrom und die Halteleistung in der Erregerspule gering halten zu können.

Die Aufgabe der Erfindung wird durch die Merkmale des Anspruchs 1 gelöst. Vorteilhafte Aus- und Weiterbildungen der Erfindung sind Inhalt der abhängigen Ansprüche.

Nach der Erfindung ist ein Elektromagnetischer Aktuator mit mindestens einem hinund her bewegbaren Anker, mit mindestens einer ersten und einer zweiten Elektromagnet-Spule und mit mindestens einem Permanentmagneten, der so im Aktuator integriert ist, dass sich der Anker bei Bestromung beider Elektromagnet-Spulen in eine erste Richtung auf eine erste Anschlagposition hin bewegt und dass sich der Anker bei einer Stromlosschaltung beider Elektromagnet-Spulen aufgrund der Anziehungskraft des Magnetfelds des Permanentmagneten in eine zweite Richtung, entgegengesetzt zur ersten Richtung, auf eine zweite Anschlagposition her bewegt, wobei die Elektromagnet-Spulen so im Aktuator angeordnet sind, dass mindestens die zweite Spule bei Bestromung das Magnetfeld des Permanentmagneten schwächt, so dass die Magnetkraft der ersten Spule ausreicht, den Anker, gegen die Haltekraft des Magnetfelds des Permanentmagneten, aus der zweiten Anschlagposition hin in die erste Anschlagposition zu bewegen, wobei jede der beiden Elektromagnet-Spulen in jeweils einem Magnetgehäuse gelagert ist und eine Ankerspindel in den Magnetgehäusen konzentrisch geführt ist, dadurch gekennzeichnet, dass die Ankerspindel zwischen den Magnetgehäusen mindestens eine permanent magnetische Platte zwischen jeweils einer Ankerplatte trägt, die so angeordnet ist, dass deren Magnetfeld versucht, einen Ringschluss über eines der Magnetgehäuse und eine der Ankerplatten herzustellen, was den Anker in die zweite Anschlagposition bewegt.

Das hat den Vorteil, dass der Aktuator sehr hohe Schließkräfte ohne Federkraft bei vertretbarer Anzugs- (Anzugsstrom 7 bis 8 A) und niedriger Halteleistung (Haltestrom ca. 0,5 A) für das Öffnen aufbringen kann. Des Weiteren sind keine pneumatischen oder hydraulischen Zusatzsysteme notwendig. Durch die Ausführung des Permanentmagnet-Antriebs ist es auch möglich, ein monostabiles Verhalten des Aktuators auszubilden, um damit eine Fail-Safe-Funktion, das heißt, das Ventil schließt automatisch bei Wegfall der Ansteuerung, gewährleisten zu können.

Weitere bevorzugte Ausführungen der Erfindung zeichnen sich dadurch aus, dass beim elektromagnetischen Aktuator um die permanent magnetische Platte und um mindestens eine Ankerplatte herum, diese mindestens teilweise umgebend, ein gehäusefester Polring angeordnet ist. Außerdem besitzt die Ankerspindel eine Einrichtung zur Dämpfung der Ankerbewegung. Diese kann aus einem auf der Ankerspindel befestigten Kolben bestehen, der mit dem Gehäuse des Aktuators einen im wesentlichen geschlossenen Raum bildet, dessen Volumen sich durch das Verschieben der Ankerspindel verändert, wodurch eine pneumatische Dämpfung der Bewegung der Ankerspindel erreicht wird. Diese pneumatische Dämpfung reduziert Kraftstöße, durch die die Ankerspindel beaufschlagt wird. Wenn eine Einrichtung zur Festlegung der Luftspaltbreite zwischen Ankerplatte und Magnetgehäuse vorhanden ist, ist es vorteilhafterweise einfach möglich, die Zuhaltekraft des Permanentmagneten auf die Öffnungskraft der ersten Elektromagnet-Spule unter Berücksichtigung der Magnetfeldbeeinflussung des Permanentmagnetfeldes durch die zweite Elektromagnet-Spule optimiert einzustellen für hohe Schließkräfte bei geringen Öffnungskräften. Vorteilhafterweise ist dies eine Einrichtung, durch die die Position eines Aktuatorgehäuses zur Ankerspindel festgelegt wird. Ganz einfach kann diese Abstandsfestlegung durch Distanzscheiben verschiedener Dicke erfolgen.

Eine vorteilhafte Ausführung der Erfindung zeichnet sich dadurch aus, dass der elektromagnetische Aktuator ein Absperrventil für einen Behälter zur Speicherung von Kraftstoff als komprimiertes kryogenes oder kondensiertes Gas, insbesondere für einen Kryohochdrucktank, beaufschlagt, zur Versorgung eines mit kryogen gespeichertem Kraftstoff betreibbaren Verbrauchers, insbesondere einer Brennkraftmaschine eines Kraftfahrzeugs, wobei der Behälter eine Entnahmeeinrichtung für den kryogen gespeicherten Kraftstoff besitzt, mindestens bestehend aus einer Entnahmeleitung mit dem Absperrventil, das durch den Aktuator elektromagnetisch betätigt wird.

Bei einer solchen Anwendung des Aktuators werden durch die Einrichtung zur Dämpfung der Ankerbewegung die hohen Schließkräfte, die beim Schalten des Absperrventils entstehen gedämpft. Einen weiteren Vorteil stellt die Möglichkeit dar, insbesondere die Anzugsphase des Absperrventils frei beeinflussen zu können. Zum Beispiel muss dann bei hohen Drücken, bei denen die Druckkraft des Mediums unter dem Ventilsitz die Öffnungsbewegung unterstützt, nicht die Öffnungsspule bestromt werden, da der Systemdruck das Absperrventil bei geschwächtem Permanentmagnetfeld aufschiebt. Damit ist vorteilhafterweise ein "sanftes" Aufschalten möglich.

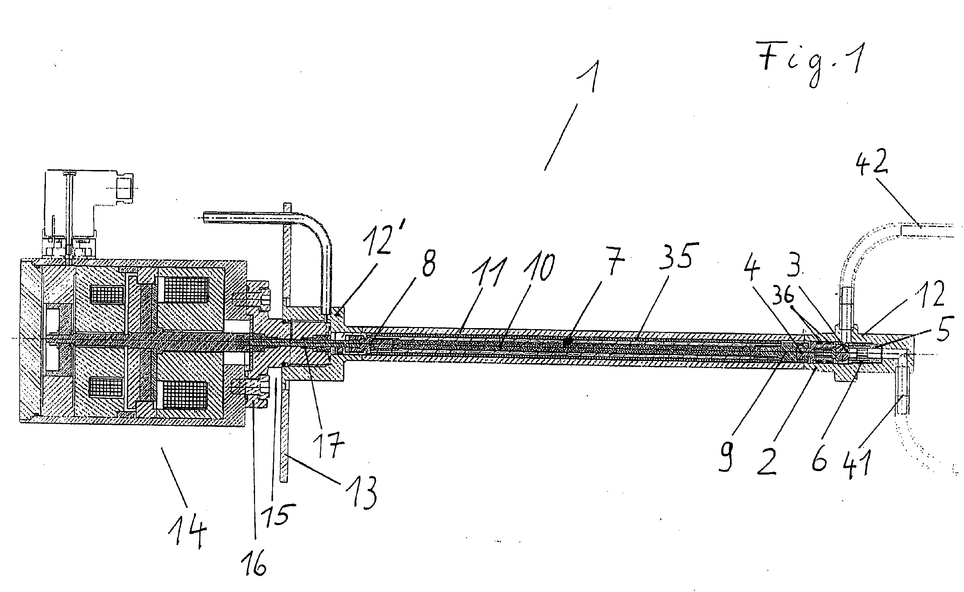

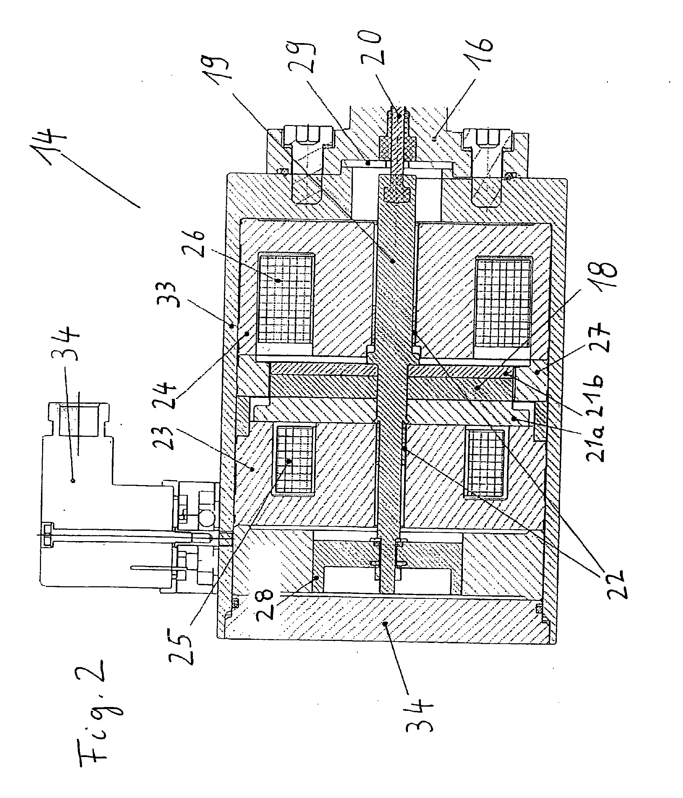

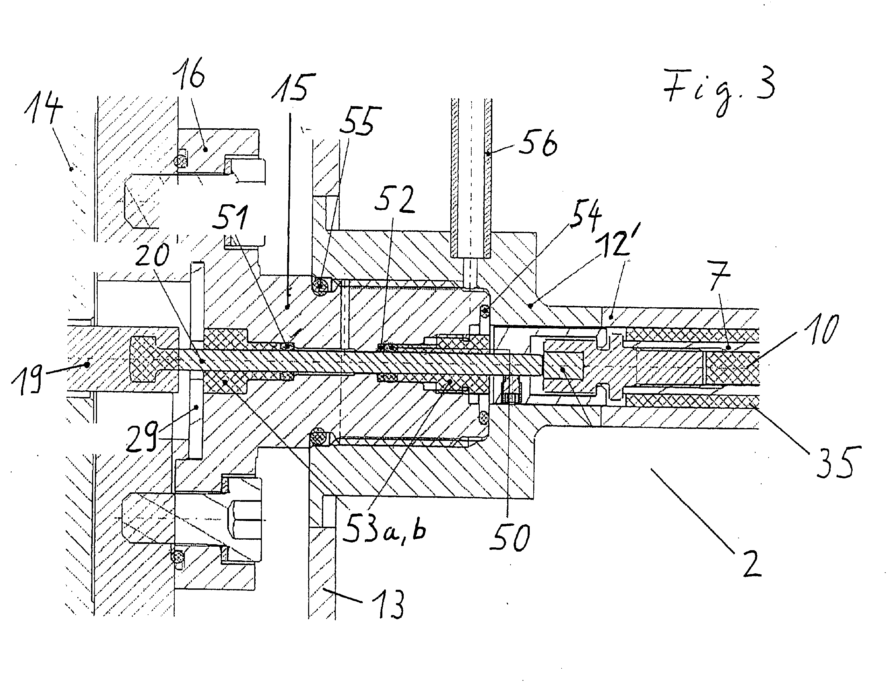

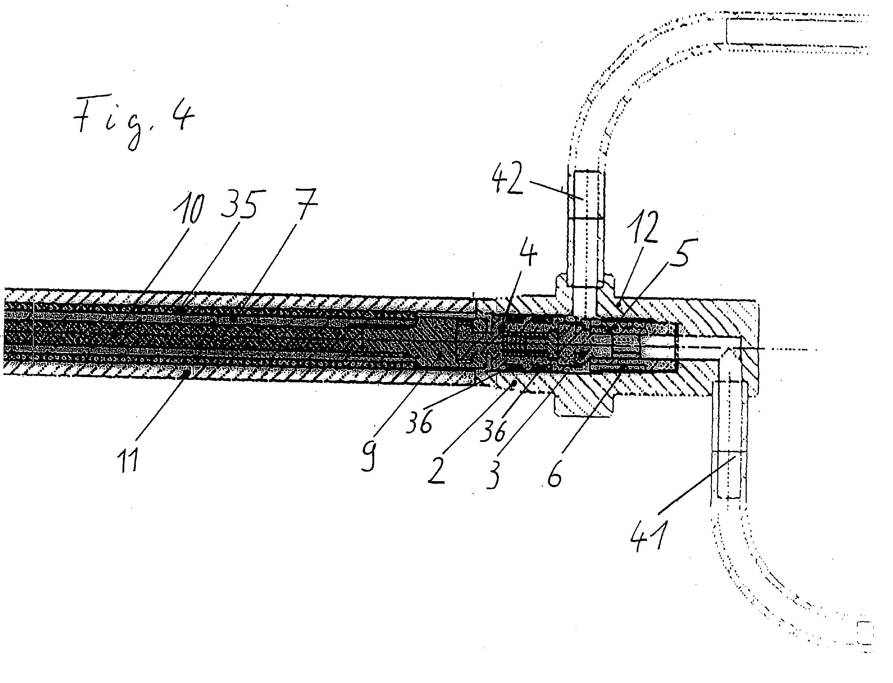

Im Folgenden wird die Erfindung anhand eines bevorzugten Ausführungsbeispiels weiter erläutert. Alle Figuren zeigen dasselbe Absperrventil einer Anlage zur Speicherung von kondensiertem Gas eines Kraftfahrzeugs mit einem elektromagnetischen Aktuator gemäß der Erfindung. Figur 1 zeigt das Absperrventil mit Aktuator, Isoliereinrichtung und Ventilstück, verkleinert im Längsschnitt. Die Figuren 2 bis 4 sind Teilvergrößerungen aus Figur 1, wobei Figur 2 im wesentlichen den Aktuator am einen Ende des Absperrventils zeigt, Figur 3 das an den Aktuator anschließende Teilstück, den Aktuatorflansch, mit der Abdichtung gegen das kryogene Medium und Figur 4 das Ventilstück am anderen Ende des Absperrventils.

In einem nicht gezeichneten Kraftfahrzeug ist ein nicht gezeichneter Kryotank zur Hochdruckspeicherung von Wasserstoff eingebaut. Dieser dient als Kraftstoff zur Versorgung einer das Kraftfahrzeug antreibenden, nicht gezeichneten, Brennkraftmaschine. Der Wasserstoff liegt im Kryotank in einem Aggregatzustand, in überkritischer Form vor. Eine nicht gezeichnete Entnahmeeinrichtung für Wasserstoff ist in den Kryotank eingebaut, diese versorgt über zwei nicht gezeichnete Entnahmeleitungen die Brennkraftmaschine mit Wasserstoff.

Jede der Entnahmeleitungen ist tanknah mit einem in den Figuren 1 bis 4 gezeichneten, durch einen elektromagnetischen Aktuator 14 betätigbaren Absperrventil 1 versehen. Zusätzlich wird die Entnahmeeinrichtung über die Entnahmeleitungen auch zum Befüllen des Behälters mit kryogen gespeichertem Kraftstoff benutzt.

Für das Befüllen des Kryotanks mit Wasserstoff oder die Entnahme von Wasserstoff aus diesem muss mindestens ein Absperrventil 1 geöffnet werden. Dafür wird dessen elektromagnetischer Aktuator 14 bestromt und der eigentliche Betankungsvorgang oder die Entnahme kann durchgeführt werden.

Ein solches Absperrventil 1 ist sowohl in einer Entnahmeeinrichtung als auch in einer Befülleinrichtung für kryogen gespeicherten Kraftstoff verwendbar. Des Weiteren kann eine solche Einrichtung auch beide Funktionen erfüllen. Vorteilhafterweise kann sich bei einem Kryotank, der als zweischaliger Vakuumbehälter ausgebildet ist, das Absperrventil 1 zwischen dem Außen- und dem Innenbehälter im Bereich der Vakuumisolation befinden, insbesondere zum Beispiel über eine angeschweißte Haltevorrichtung in einen Außenbehälter 57 eingesetzt und dort befestigt. Das Absperrventil 1 kann auch an beiden Behältern angeschweißt bzw. andersartig befestigt sein. Innen am Außenbehälter und außen am Innenbehälter. In allen Fällen ist eine solche Bauweise auf jeden Fall günstig fürs Package des Kraftfahrzeugs, das Absperrventil 1 benötigt nämlich für sich keinen extra zu reservierenden Bauraum.

Außerdem ist das Absperrventil 1 dadurch möglichst tanknah untergebracht, mit dem Vorteil, dass in einer sicherheitskritischen Lage die Wasserstoffentnahme direkt am Kryotank selbst gesperrt werden kann und nicht eine vom Kryotank entfernte Leitung gesperrt wird. Es kann zwischen Kryotank und Absperrventil so vorteilhafterweise kein Bruch der Entnahme-/Befüllleitung auftreten.

Die Figuren 1 bis 4 zeigen das Absperrventil 1. Es besteht aus einem Ventilgehäuse 2 mit komplett demontierbaren Ventileinsätzen einschließlich einer verdrehbaren Kugel 3 als Dichtungskörper, einem Ventilkolben 4, einem Ventilsitz 5 mit statischer Sitzdichtung 6, einer Koppelstange 7 mit einem oberen und einem unteren Druckstück 8, 9, sowie Isolierstücken 10, 35 aus Teflon in und um die Koppelstange 7 des Absperrventils 1, welche ein freies Volumen innerhalb des Absperrventils 1 reduzieren, um den Wärmeeintrag in das kryogene Fluid zu reduzieren, sowie die Koppelstange 7 führen. Das obere Ventilgehäuse 12', als Teil des Gehäuses 2, ist mit einem Ventilrohr 11 verbunden und dieses wiederum mit dem unteren Ventilgehäuse 12, das die eigentliche kryogene Ventileinheit enthält. Das obere Ventilgehäuse 12' ist mit einer Wand 13 einer Vakuumhülle, welche das Absperrventil 1 umgibt und gegen die Umgebung isoliert, verbunden.

Eine Ankerspindel 19 und die Koppelstange 7 können hohe Ventilkräfte auf den Ventilkolben 4 übertragen, weil der innere Teflon-Isolator 10 auch als Stütze gegen Knicken der Koppelstange 7 wirkt. Durch eine nicht starre Verbindung zwischen unterem Druckstück 9 der Koppelstange 7 und dem Ventilkolben 4, welcher sehr genau durch zwei Gleitringe 36 im unteren Ventilgehäuse 12 geführt wird, wirken sich Achsversatz und Winkeltoleranzen von Koppelstange 7 und Ventilkolben 4 nicht wesentlich auf die Dichtfläche aus, zum Beispiel in Form einer ungleichmäßigen Einprägung.

Ein elektromagnetischer Aktuator 14 sitzt außerhalb der Vakuumhülle und ist mittels eines Adapterstücks 15, welches auf der Seite zum Aktuator 14 einen Flansch 16 aufweist mit dem Absperrventil 1 verbunden. In diesem Adapterstück 15 ist eine dynamische Abdichtung bestehend aus einer doppelten O-Ring-/Stützringabdichtung 52, 53 integriert.

Der rein elektromagnetische Antrieb des Absperrventils 1 ist ein Doppelspulen-Permanentmagnet-Aktuator 14. Die Schließkraft für das Absperrventil 1 wird in diesem Fall nicht von einer Feder, sondern von einem in den Aktuator 14 integrierten Schließelement, einem Permanentmagneten 18, zum Beispiel aus Neodym (NdFeB mit Beschichtung), aufgebracht und mittels einer Ankerspindel 19, einer Aktuatorspindel 20 und der Koppelstange 7 auf den Ventilsitz 5 übertragen. Der Permanentmagnet 18 ist zwischen zwei Ankerplatten 21 a, 21 b aufgenommen und mit diesen auf der in Gleitlagerbuchsen 22 geführten Ankerspindel 19 montiert. Ein oberes und ein unteres Magnetgehäuse 23, 24 nimmt je eine Spule auf, eine so genannte Haltespule 25 im oberen Magnetgehäuse 23 und eine so genannte Kompensationsspule 26 im unteren Magnetgehäuse 24. Dazwischen ist ein Polring 27 platziert. Magnetgehäuse 23, 24, Polring 27 und Ankerplatten 21 bestehen aus magnetisierbarem Material. Weiterhin enthält der Aktuator 14 eine pneumatische Dämpfungseinrichtung, aus einem am Ende der Ankerspindel 19 befestigten, zum Gehäuse 33 des Aktuators 14 hin offenen, topfartigen Kolben 28. Durch Luftkompression gegenüber dem Gehäuse 33 werden die Kraftstöße, die beim Schalten des Absperrventils 1 entstehen, reduziert.

Außen am Gehäuse 33 des elektromagnetischen Aktuators 14 ist ein Verbindungselement 34 für den elektrischen Stromanschluss angebracht. Das Funktionsprinzip des Aktuators 14 ist folgendermaßen zu beschreiben:
Das Magnetfeld des Permanentmagneten 18 läuft im geschlossenen Zustand des Absperrventils 1 hauptsächlich über die untere Ankerplatte 21 b, das untere Magnetgehäuse 24, über den Polring 27 auf die obere Ankerplatte 21 a. Über die Höhe einer Abstimmscheibe 29 zwischen Flansch 16 und Aktuator 14 wird dieser bei der Montage so vorgespannt, dass ein kleiner Luftspalt von ca. 0,1 bis 0,2 mm zwischen unterer Ankerplatte 21 b und unterem Magnetgehäuse 24 bleibt. Das Magnetfeld des Permanentmagneten 18 versucht, den oben beschriebenen Ringschluss mit Kontakt zwischen unterer Ankerplatte 21 b und unterem Magnetgehäuse 24 herzustellen und erzeugt somit eine Kraft in Richtung Ventilsitz 5. Mit dieser Konfiguration und der oben beschriebenen Vorspannung ergibt sich eine Anpresskraft der Kugel 3 auf den Ventilsitz 5 von ca. 1500 bis 1600 N.

Zum Öffnen des Absperrventils 1 werden im Normalfall beide Spulen 25, 26 zeitlich versetzt bestromt. Zuerst wird die Kompensationsspule 26 eingeschaltet. Diese wirkt dem Magnetfeld des Permanentmagneten 18 entgegen und verschiebt dieses in die untere Ankerplatte 21 b, so dass das Spulenfeld hauptsächlich durch das untere Magnetgehäuse 24 fließt. Damit ist die Anziehungskraft zwischen Ankerplatten 21 a, 21 b und unterem Magnetgehäuse 24 so weit geschwächt, dass beim späteren Bestromen der Haltespule 25, bei weiterhin bestromter Kompensationsspule 26, die Ankerspindel 19 samt Ankerplatten 21 a, 21 b und Permanentmagnet 18 in Richtung Gehäusedeckel 34 bewegt wird und das Absperrventil 1 somit öffnet. Wenn die obere Ankerplatte 21 a, wie in der Figur 2 dargestellt, am oberen Magnetgehäuse 23 anliegt, wird die Kompensationsspule 26 abgeschaltet und die Haltespule 25 auf einen schwächeren Haltestrom herunter geregelt. Der Luftspalt zwischen unterer Ankerplatte 21 b und unterem Magnetgehäuse 24 ist nun groß genug, dass eine niedrige Halteleistung ausreicht, um das Absperrventil 1 sicher offen zu halten. Gleichzeitig ist dieser Luftspalt aber klein genug, dass noch genügend Restkraft durch das Permanentmagnetfeld 18 vorhanden ist, damit das Absperrventil 1 bei Abschalten des Haltespulenstroms aufgrund dieser Restkraft wieder schließt. Wird also bei Betriebsende die Haltespule 25 abgeschaltet, versucht das Magnetfeld des Permanentmagneten 18 den Ring über Ankerplatten 21 a, 21 b, unteres Magnetgehäuse 24 und Polring 27 wieder zu schließen und die Ankerspindel 19 bewegt sich vom Gehäusedeckel 34 weg und schließt das Absperrventil 1. Je kleiner dabei der verbleibende Luftspalt zwischen unterer Ankerplatte 21 b und unterem Magnetgehäuse 24 wird, desto größer wird die Magnetkraft.

Das Verschlussorgan des Absperrventils 1 ist, wie alle weiteren Elemente des unteren Ventilgehäuses 12, zum Beispiel Einlass- und Auslasskanal 41, 42, sehr tiefen Temperaturen des kryogen gespeicherten Kraftstoffs ausgesetzt. Diese liegen bei bis zu -240 Grad Celsius. Der elektromagnetische Aktuator 14 sollte solch niedrigen Temperaturen nicht ausgesetzt werden, außerdem ist zur Minimierung des Wärmeeintrags eine Isolierung nötig, die die Wärmeübertragung vom Aktuator 14 auf das Ventilgehäuse 2 und sonstige Funktionsgruppen mindert. Daher ist die Schließbetätigungskraft übertragende Koppelstange 7 aus einem wärmeisolierenden Kunststoff ausgebildet. Außerhalb der Koppelstange 7, ist in den verbleibenden Raum im Mittelteil des einstückigen Ventilgehäuses 2, um die Koppelstange 7 herum, eine weiteren Wärmeübergang verhindernde Isoliereinrichtung, zum Beispiel aus den Kunststoffen PTFE oder PU, eingebracht. Dieser Isolationszylinder 35, ist auch so ausgebildet, dass das Ventilgehäuse 2 fast völlig mit Material ausgefüllt ist, was bewirkt, dass im Ventilgehäuse 2 so wenig wie möglich Freiraum mit Gas gefüllt ist.

Das Adapterstück 15 mit dem Flansch 16 ist gegenüber dem Ventilgehäuse 2 gasdicht abgedichtet und zwar sowohl zwischen zueinander beweglichen, als auch zwischen zueinander feststehenden Teilen. Durch jeweils zwei dynamische und zwei statische Abdichtungen wird mittels O-Ringen der gasbeaufschlagte Teil des Absperrventils 1 gasdicht gegenüber dem Aktuator 14 verschlossen. Dieses Prinzip der doppelten Abdichtung durch jeweils zwei Barrieren hat den Vorteil, dass im Zwischenraum zwischen erster und zweiter Dichtungsbarriere über eine Detektionsleitung 56 potentielle Leckagen sensiert und abgeleitet werden können.

Die erste und die zweite dynamische Abdichtung des Absperrventils 1 gegen Gasaustritt bestehen aus einem O-Ringen 50, 51 zwischen Flansch 16 und Aktuatorspindel 20, wobei bei der ersten dynamischen Abdichtung der O-Ring 50 noch durch einen Stützring 52 gegen Spaltextrusion gesichert ist. Die O-Ringe der beiden dynamischen Abdichtungen werden durch im Adapterstück 15 integrierte, die Aktuatorspindel 20 führende Gleitlagerbuchsen 53 gehalten. Die erste und die zweite Barriere der beiden statischen Abdichtungen bildet je ein O-Ring 54, 55 zwischen oberem Ventilgehäuse 12' und Adapterstück 15. Zwischen der jeweils ersten und zweiten Barriere der dynamischen und der statischen Abdichtungen wird durch eine Detektionsleitung 56 jeweils ein Hohlraum zwischen Aktuatorspindel 20 und Adapterstück 15 im Fall der beiden dynamischen Dichtungen und zwischen Adapterstück 15 und oberem Ventilgehäuse 12' im Fall der beiden statischen Dichtungen abgegriffen.

Die Abdichtungen sind im oberen Ventilgehäuse 12' platziert, welches keinen kryogenen Temperaturen ausgesetzt ist. Dafür ist das gesamte Ventilgehäuse 2 druckfest und einstückig ausgeführt. Das freie Volumen des Absperrventils 1 ist durch die beiden Isolierstücke 10, 35 in der Koppelstange 7und außen um die Koppelstange 7 herum auf ein Minimum reduziert. Der Durchmesser der Aktuatorspindel 20 ist so klein wie möglich gewählt, da deren Querschnittsfläche die Angriffsfläche für die resultierenden Druckkräfte darstellt, welche mit dem Quadrat des Durchmessers steigen und denen die dynamische Dichtung standhalten muss. Des Weiteren müssen diese auch vom Aktuator 14 überwunden werden. Dafür ist die Aktuatorspindel 20 aus einem hochfesten, wasserstoffbeständigen Werkstoff ausgeführt. Um die notwendige Dichtheit gegenüber großen Drücken zu erzielen und die großen Kräfte sicher zu übertragen, ist die Aktuatorspindel 20 über eine große Länge geführt, durch die zwei in das Adapterstück 15 integrierte Gleitlagerbuchsen 53. Des Weiteren sind glatte Oberflächen, sowohl auf der Aktuatorspindel 20, zum Beispiel feingedreht und poliert, als auch beim Adapterstück 15, in der Nut für die dynamische Dichtung, notwendig, um zuverlässige Dichtigkeit zu erzielen. Durch die Lage der dynamischen Abdichtung am "warmen" Ventilende sind keine kryogenen Dichtungsmaterialien, wie Faltenbälge, notwendig, es können Standardmaterialien für Hochdruck-Anwendung verwendet werden. Der Entfall von Faltenbälgen, die für Abdichtungen unter Kryo-Bedingungen üblich und notwendig wären, bedeutet deutlich geringere resultierende Druckkräfte, da die Wirkfläche von Faltenbälgen deutlich größer ist. Außerdem dass keine zusätzlichen Federsteifigkeiten des Balgs zu berücksichtigen sind, was eine geringere Leistung des Ventilantriebs ermöglicht und deutlich günstigere Fertigungskosten und eine längere Lebensdauer als bei einer geschweißten Faltenbalgeinheit.

## Patentansprüche

1. Elektromagnetischer Aktuator (14) mit mindestens einem hin- und her bewegbaren Anker, mit mindestens einer ersten und einer zweiten Elektromagnet-Spule und mit mindestens einem Permanentmagneten (18), der so im Aktuator integriert ist, dass sich der Anker bei Bestromung beider Elektromagnet-Spulen in eine erste Richtung auf eine erste Anschlagposition hin bewegt und dass sich der Anker bei einer Stromlosschaltung beider Elektromagnet-Spulen aufgrund der Anziehungskraft des Magnetfelds des Permanentmagneten (18) in eine zweite Richtung, entgegengesetzt zur ersten Richtung, auf eine zweite Anschlagposition her bewegt, wobei die Elektromagnet-Spulen so im Aktuator angeordnet sind, dass mindestens die zweite Spule bei Bestromung das Magnetfeld des Permanentmagneten (18) schwächt, so dass die Magnetkraft der ersten Spule ausreicht, den Anker, gegen die Haltekraft des Magnetfelds des Permanentmagneten (18), aus der zweiten Anschlagposition hin in die erste Anschlagposition zu bewegen, wobei jede der beiden Elektromagnet-Spulen (25, 26) in jeweils einem Magnetgehäuse (23, 24) gelagert ist und eine Ankerspindel (19) in den Magnetgehäusen (23, 24) konzentrisch geführt ist, **dadurch gekennzeichnet, dass** die Ankerspindel (19) zwischen den Magnetgehäusen (23, 24) mindestens eine permanent magnetische Platte (18) zwischen jeweils einer Ankerplatte (21 a, 21 b) trägt, die so angeordnet ist, dass deren Magnetfeld versucht, einen Ringschluss über eines der Magnetgehäuse (24) und eine der Ankerplatten (21 b) herzustellen, was den Anker in die zweite Anschlagposition bewegt.

2. Elektromagnetischer Aktuator (14) nach Anspruch 1, **dadurch gekennzeichnet, dass** um die permanent magnetische Platte (18) und um mindestens eine Ankerplatte (21 b) herum, diese mindestens teilweise umgebend, ein gehäusefester Polring (27) angeordnet ist.

3. Elektromagnetischer Aktuator (14) nach einem der Ansprüche 1 oder 2, **dadurch gekennzeichnet, dass** die Ankerspindel (19) eine Einrichtung zur Dämpfung der Ankerbewegung besitzt.

4. Elektromagnetischer Aktuator (14) nach einem der Ansprüche 1 bis 3, **dadurch gekennzeichnet, dass** eine Einrichtung zur Festlegung der Luftspaltbreite zwischen Ankerplatte 21 b und Magnetgehäuse 24 vorhanden ist, die insbesondere eine Einrichtung ist, durch die die Position eines Aktuatorgehäuses 33 zur Ankerspindel (19) festgelegt wird, insbesondere durch eine Distanzscheibe (29).

5. Elektromagnetischer Aktuator (14) nach einem der Ansprüche 1 bis 4, **dadurch gekennzeichnet, dass** dieser ein Absperrventil (1) für einen Behälter zur Speicherung von Kraftstoff als komprimiertes kryogenes oder kondensiertes Gas, insbesondere für einen Kryohochdrucktank, beaufschlagt, zur Versorgung eines mit kryogen gespeichertem Kraftstoff betreibbaren Verbrauchers, insbesondere einer Brennkraftmaschine eines Kraftfahrzeugs, wobei der Behälter eine Entnahmeeinrichtung für den kryogen gespeicherten Kraftstoff besitzt, mindestens bestehend aus einer Entnahmeleitung mit dem Absperrventil (1), das durch den Aktuator (14) elektromagnetisch betätigt wird.

## Claims

1. An electromagnetic actuator (14) with at least one armature, which is movable back and forth, with at least a first and a second electromagnetic coil and with at least one permanent magnet (18), which is integrated in the actuator in such a way that the armature, when the two electromagnetic coils are energised, moves in a first direction to a first stop position and in that the armature, when the two electromagnetic coils are switched to no current, because of the attractive force of the magnetic field of the permanent magnet (18), moves in a second direction, opposing the first direction, to a second stop position, the electromagnetic coils being arranged in the actuator in such a way that at least the second coil, when energised, weakens the magnetic field of the permanent magnet (18), so the magnetic force of the first coil is sufficient to move the armature, against the holding force of the magnetic field of the permanent magnet (18), from the second stop position into the first stop position, each of the two electromagnetic coils (25, 26) being mounted in a respective magnetic housing (23, 24) and an armature spindle (19) being guided concentrically in the magnetic housings (23, 24), **characterised in that** the armature spindle (19), between the magnetic housings (23, 24), carries at least one permanently magnetic plate (18) between a respective armature plate (21 a, 21 b), which is arranged in such a way that the magnetic field thereof attempts to produce a ring closing by means of one of the magnetic housings (24) and one of the armature plates (21 b), which moves the armature into the second stop position.

2. An electromagnetic actuator (14) according to claim 1, **characterised in that** arranged around the permanently magnetic plate (18) and around at least one armature plate (21 b), at least partly surrounding the latter, is a pole ring (27) fixed to the housing.

3. An electromagnetic actuator (14) according to either of claims 1 or 2, **characterised in that** the armature spindle (19) has a device for damping the armature movement.

4. An electromagnetic actuator (14) according to any one of claims 1 to 3, **characterised in that** a device for fixing,the air gap width between the armature plate (21 b) and the magnetic housing (24) is present which, more especially, is a device, by means of which the position of an actuator housing (33) with respect to the armature spindle (19) is fixed, more especially by a spacer disc (29).

5. An electromagnetic actuator (14) according to any one of claims 1 to 4, **characterised in that** the latter acts on a shut-off valve (1) for a container for storing fuel as compressed cryogenic or condensed gas, more especially for a high-pressure cryogenic tank, to supply a load that can be operated by cryogenically stored fuel, more especially an internal combustion engine of a motor vehicle, the container having a removal device for the cryogenically stored fuel, at least consisting of a removal line with the shut-off valve (1), which is electromagnetically actuated by the actuator (14).

## Revendications

1. Actionneur électromagnétique (14) comprenant au moins un induit mobile en va-et-vient, au moins une première et une seconde bobine électromagnétique et au moins un aimant permanent (18) qui est intégré à l'actionneur de sorte que lorsque les deux bobines électromagnétiques sont alimentées en courant, l'induit se déplace dans une première direction, à partir d'une première position de butée, et que lorsque les deux bobines électromagnétiques ne sont pas alimentées en courant, l'induit se déplace sous l'action de la force d'attraction du champ magnétique de l'aimant permanent (18) dans une seconde direction, opposée à la première direction, à partir d'une seconde position de butée, les bobines électromagnétiques étant montées dans l'actionneur de sorte qu'au moins la seconde bobine affaiblisse le champ magnétique de l'aimant permanent (18) lorsqu'elle est alimentée en courant, de sorte que la force magnétique de la première bobine suffise pour déplacer l'induit, contre la force de retenue du champ magnétique de l'aimant permanent (18) de la seconde position de butée vers la première position de butée, chacune des deux bobines électromagnétiques (25, 26) étant logée dans un boîtier magnétique respectif (23, 24) et un noyau d'induit (19) se déplaçant concentriquement dans les boîtiers magnétiques (23, 24),
**caractérisé en ce que**
le noyau d'induit (19) porte, entre les boîtiers magnétiques (23, 24) au moins une plaque magnétique permanente (18) située entre une plaque d'induit respective (21a, 21b) et qui est montée de sorte que son champ magnétique tende à former avec l'un des boîtiers magnétiques (24) et l'une des plaques d'induit (21b) un court circuit en boucle qui déplace l'induit dans la seconde position de butée.

2. Actionneur électromagnétique (14) conforme à la revendication 1, **caractérisé en ce qu'**
un anneau polaire (27) solidaire du boîtier est monté autour de la plaque magnétique permanente (18) et autour d'au moins une plaque d'induit (21b) en les entourant au moins partiellement.

3. Actionneur électromagnétique (14) conforme à l'une des revendications 1 et 2,
**caractérisé en ce que**
le noyau d'induit (19) est équipé d'un dispositif d'amortissement du mouvement de l'induit.

4. Actionneur électromagnétique (14) conforme à l'une des revendications 1 à 3,
**caractérisé en ce qu'**
il comporte un dispositif permettant de fixer la largeur de l'intervalle entre la plaque d'induit (21b) et le boîtier magnétique (24) constitué en particulier par un dispositif permettant de fixer la position d'un boîtier d'actionneur (33) par rapport au niveau d'induit (19) en particulier un disque d'écartement (29).

5. Actionneur électromagnétique (14) conforme à l'une des revendications 1 à 4,
**caractérisé en ce qu'**
il commande une soupape de blocage (1) d'un réservoir de stockage de carburant constitué par du gaz cryogénique comprimé ou du gaz condensé, en particulier pour un réservoir de gaz cryogénique sous haute pression, pour permettre l'alimentation d'un consommateur fonctionnant au carburant cryogénique stocké, en particulier, un moteur à combustion interne d'un véhicule, ce réservoir comprenant au moins un dispositif de soutirage du carburant cryogénique stocké, constitué au moins d'une conduite de soutirage équipée de la soupape de blocage (1) qui est actionnée électromagnétiquement par l'actionneur (14).
